# EUROPEAN PATENT APPLICATION

(11) **EP 4 516 547 A1**
(43) Date of publication of application: **05.03.2025**
(21) Application number: 23811534.9
(22) Date of filing: 21.04.2023
(51) Int. Cl.: B60K 1/04, B62D 21/02

(54) **SUPPORT DEVICE FOR DRIVE BATTERY**

(30) Priority: 26.05.2022 JP 2022085909
(71) Applicant: Daimler Truck AG, 70771 Leinfelden-Echterdingen (DE)
(72) Inventor: KUMAGAI, Naotatsu, Kawasaki-shi, Kanagawa 211-8522 (JP)
(74) Representative: Hofstetter, Schurack & Partner
(86) International application number: PCT/JP2023/015953
(87) International publication number: WO 2023/228656

(57) **Abstract**

A support device for a drive battery 4 mounted on an electric vehicle, the support device includes: a bracket 7 that covers a front side or a rear side of the drive battery and that has a squared C-shaped cross section including a side face part having a depressed face part 13 depressed against the drive battery and a projecting face part 14 projecting toward the drive battery 4, an upper face part, and a lower face part; and an installing member12 that installs a component 11 of the electric vehicle, wherein the installing member12 is attached to the depressed face part13, and a tip part 12b of the installing member 12 projecting from the depressed face part13 to the drive battery4 is arranged at a position departing from an outer face of a housing 4A of the drive battery 4 further to the depressed face part 13 than an apex face 14a of the projecting face part14 or at a position flush with the apex face 14a.

## Description

### [Technical Field]

The present invention is related to a support device for a drive battery preferably used for a large-size electric vehicle such as a truck.

### [Background Art]

Conventionally, from the viewpoint of reducing the load on the environment, the development of an electric vehicle such as an electric vehicle, a hybrid vehicle, or a fuel cell vehicle that travels by supplying power of a drive battery to the motor has been progressing in a small vehicle such as a passenger car. Furthermore, in recent years, in the field of heavy-duty vehicles such as trucks, the development of electric vehicles has been performed (e.g., see Patent Document 1).

### [Citation List]

### [Patent Literature]

[Patent Document1] Japanese Laid-open Patent Application No. 2016-113063

### [Technical Problem]

### [Problems to be Solved by Invention]

Incidentally, the drive battery is mounted on the vehicle with a supporting member, which is sometimes attached with components such as a fuse box of the motor disposed in the vicinity of the drive battery, for example.

A fastening member such as a bolt is used for this attachment, and is provided on the side face (including the front face and the rear face) because it is difficult to arrange the fastening member on the upper face or the lower face of the supporting member due to the restriction of the clearance between the drive battery and the supporting member.

However, a fastening member such as a bolt comes to be a protrusion by its head projecting inside the supporting member toward the drive battery.

If the drive battery moves toward the supporting member due to the impact of a collision of the vehicle, there is a possibility that the drive battery is pressed to come into contact with this protrusion and the impact load is concentrated on the contact portion to damage the drive battery.

With the foregoing problems in view, one of the objects of the present invention is to provide a support device for a drive battery which support device is provided with an installing member to install a component of an electric vehicle and that is able to inhibit the drive battery from being damaged by impact when a vehicle collision, for example.

### [Solution to Problem]

The present embodiment developed in order to solve at least part of the above problems, and the following embodiments can be achieved as application examples.
(1) The support device for a drive battery mounted on an electric vehicle of the present application example includes: a bracket that covers a front side or a rear side of the drive battery and that has a squared C-shaped cross section including a side face part having a depressed face part depressed against the drive battery and a projecting face part projecting toward the drive battery, an upper face part, and a lower face part; and an installing member that installs a component of the electric vehicle, wherein the installing member is attached to the depressed face part, and a tip part of the installing member projecting from the depressed face part to the drive battery is arranged at a position departing from an outer face of a housing of the drive battery further to the depressed face part than an apex face of the projecting face part or at a position flush with the apex face.

According to this application example, when the vehicle collides (a front collision or a rear collision), firstly, only the apex face of the projecting face part collides with the housing of the drive battery, or the apex face of the projecting face part and the tip portion of the installing member collides with the housing of the drive battery at the same time. Accordingly, the tip portion of the installing member can be avoided from locally colliding with the housing of the drive battery, so that it is possible to inhibit the housing of the drive battery from being damaged. Therefore, the safety is enhanced.

(2) In the present application example, the projecting face part may preferably be arranged at a position facing a portion of the housing, the portion having high strength.

Arranging the projecting face part at a position facing a portion of the housing which portion having high strength as the above makes it possible to less easily damaging the housing when the projecting face part collides with the housing in the event of a collision of a vehicle, and consequently suppress generation of damaging of the housing.

(3) In the present application example, the projecting face part and the depressed face part linearly may preferably extend; and a plurality of the projecting face parts may preferably be provided so as to sandwich the depressed face part.

With such a configuration, it is possible to surely prevent the tip portion of the installing member from locally colliding with the housing of the drive battery so that generation of damaging of the housing of the drive battery can be suppressed.

(4) In the present application example, the projecting face part may preferably extend around a circumference of the depressed face part.

With such a configuration, it is possible to surely prevent the tip portion of the installing member from locally colliding with the housing of the drive battery so that generation of damaging of the housing of the drive battery can be suppressed.

(5) In the present application example, the projecting face part may preferably be arranged such that the apex face is in contact with a face of the housing.

With such a configuration, it is possible to prevent the apex face of the projecting face part from locally colliding with the housing so that generation of damaging of the housing can be suppressed.

(6) In the present application example, the component is a fuse box of a driving motor of the electric vehicle.

This configuration makes it possible to spatial-efficiently arrange the fuse box.

### [Advantageous Effects of Invention]

According to the present embodiment, it is possible to inhibit the drive battery from being damaged by impact when a vehicle collision, for example.

### [Brief Description of Drawing]

[FIG. 1] FIG. 1 is a perspective view showing an exploded bracket to describe a structure of a support device for a drive battery according to an embodiment;
[FIG. 2] FIG. 2 is a perspective view showing the support device for a drive battery of FIG. 1;
[FIG. 3] FIG. 3 is a perspective view showing a state where a drive battery of FIG. 1 is mounted to a vehicle body;
[FIG. 4] FIG. 4 is a perspective view showing an example of arrangement when multiple driving batteries according to an embodiment are mounted to the vehicle body;
[FIG.5] FIG. 5 is a side view schematically showing an example of arrangement of multiple driving batteries and a component when multiple driving batteries are attached to the vehicle body;
[FIG. 6] FIG. 6 is a perspective view showing a bracket provided to the support device for a drive battery according to the embodiment;
[FIG. 7] FIG. 7 is a cross-sectional view of the bracket of FIG. 6, (a) showing a normal state (not colliding), (b) showing a state after a collision;
[FIG. 8] FIG. 8 is a cross-sectional view of a comparative example of the bracket of FIG. 6, (a) showing a normal state (not colliding), (b) showing a state after a collision;
[FIG. 9] FIG. 9 is a side view schematically showing a modification of arrangement of multiple driving batteries and components when multiple driving batteries are attached to the vehicle body;
[FIG. 10] FIG. 10 is a perspective vie showing a first modification of the bracket of FIG. 6;
[FIG. 11] FIG. 11 is a perspective vie showing a second modification of the bracket of FIG. 6; and
[FIG. 12] FIG. 6 is a cross-sectional view showing modifications of the bracket of FIG. 6, (a) showing a third modification, (b) showing the fourth modification.

### [Description of Embodiments]

An embodiment of the present disclosure will now be described with reference to the accompanying drawings. The following example is merely and there is no intention to exclude various modification and application of techniques not explicitly described in the embodiment. Each structure of the following embodiment can be variously modified without departing from the scope thereof, and can be selected or omitted according to requirement, or combined in an appropriate combination.

### [1.Structure]

### [1-1.Overall Structure]

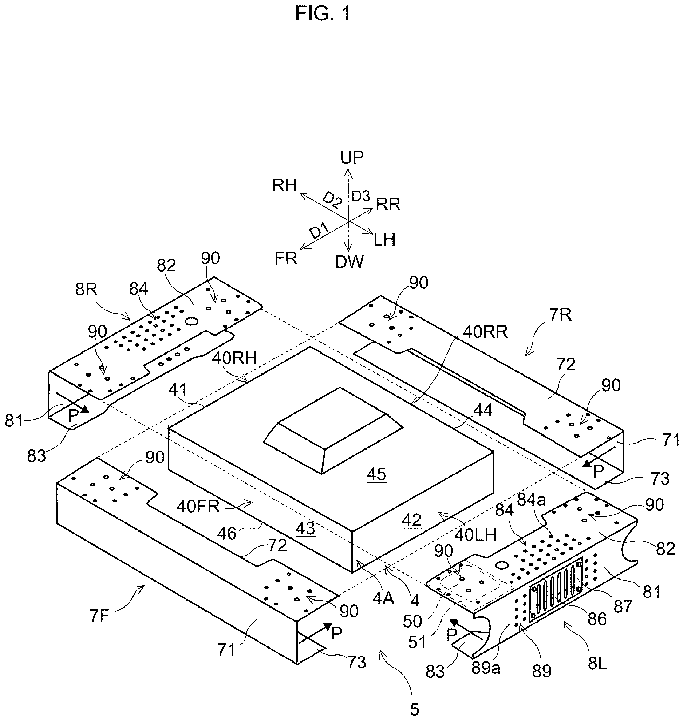

As shown in FIGS. 1-3, a support device 1 (simply referred to as the support device 1) for a battery pack for a vehicle according to the present embodiment is mounted on an electric truck 3 having ladder frame 2 forming the skeleton of the vehicle body. The electric truck 3 is an electric vehicle that travels by supplying electric power of a drive battery pack (also referred to as "drive battery" and simply "battery pack") 4 to a non-illustrated electric motor. In addition to pure electric vehicles not equipped with an internal combustion engines, electric vehicles also include hybrid vehicles and fuel cell vehicles equipped with driving sources or internal combustion engines for power generation. Further, the electric truck 3 is also referred to as "electric vehicle 3" or "vehicle 3".

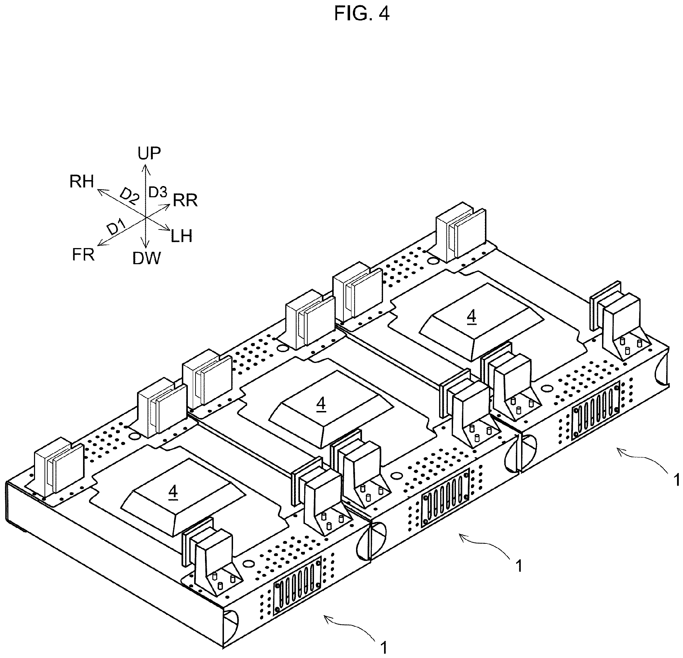

Hereinafter, the front-rear direction of the electric truck 3 is also referred to as vehicle length direction D1, and the left-right direction of the electric track 3 is also referred to as vehicle width direction D2. An up-down direction orthogonal to both the front-rear direction and the left-right direction is also referred to as a vehicle height direction D3. In the drawings: front is denoted by "FR"; rear is denoted by "RR"; left hand is denoted by "LH"; right hand is denoted by "RH"; upside is denoted by "UP"; and downside is denoted by "DW". Incidentally, FIG. 4 shows the lower structure of the electric truck 3 and omits the upper structure (body) disposed on the ladder frame 2.

The ladder frame 2 is a member forming a skeleton of the electric truck 3, and has high rigidity and high strength. The ladder frame 2 includes a pair of side rails 21 extending in the vehicle length direction D1, and multiple cross members 22 extending in the vehicle width direction D2 to connect the side rails 21 to each other.

A pair of side rails 21 are spaced apart from each other in the vehicle width direction D2. Each side rail 21 is formed into a channel shape (U-shaped cross section) including a plate-shaped web part 21a along the vehicle length direction D1 and vehicle height direction D3 and a pair of plate-shaped flange parts 21b, 21c extending toward the inside of the vehicle width direction D2 respectively from the upper and lower edges of the web part 21a.

The multiple cross members 22 are spaced apart from one another other in the vehicle length direction D1. Here, two cross members 22 are illustrated, one at an overlapping position with the battery pack 4 and the other at a position rear to the battery pack 4. Some battery pack 4 may include a predetermined component provided in the battery housing (housing) 4A.

To the battery pack 4, for example, a general-purpose high-voltage battery pack used in a passenger car is applied. In the electric truck 3, the battery pack 4 is mounted under the pair of side rails 21 and protrudes outward in the vehicle width direction D2 from the respective side rails 21. Here, a box-shaped battery pack 4 is illustrated which has a dimension of the vehicle height direction D3 is smaller (thinner) than the respective dimensions of the vehicle length direction D1 and the vehicle width direction D2. However, the shape of battery pack 4 is not particularly limited.

The battery pack 4 has a pair of battery side faces 41, 42, each facing outward of the vehicle width direction D2. The pair of battery side faces 41, 42 are respectively located on the outside in the vehicle width direction D2 of the pair of side rails 21. More specifically, the right battery side face 41 is located to the right side of the right side rail 21, and the left battery side 42 is located to the left side of the left side rail 21.

Since the battery side faces 41, 42 of the battery pack 4 are disposed outside in the vehicle width direction D2 of the side rails 21 as described above, the battery pack reserves the dimension of the vehicle width direction D2 larger than the distance between the web parts 21a of the side rails 21. This structure allows the battery pack 4 to have an increased capacity. The battery pack 4 is preferably disposed over a wide range between the front wheel axle and the rear wheel axle in order to ensure the cruising range of the electric truck 3. In an electric truck 3 having a relatively small size (relatively short wheelbase), a single battery pack 4 may be disposed over almost the entire wheelbase. In this case, the front wheels are located close to the front of the battery pack 4, and the rear wheels are located close to the rear of the battery pack 4.

The size of the electric truck 3 and the number of the battery packs 4 are not limited to those of the embodiment. In an electric truck 3 having a relatively large size (relatively long wheelbase), multiple battery packs 4 may be provided side by side in the vehicle length direction D1. Also in this case, by arranging multiple battery packs 4 over a wide range of the wheel base, the capacity of the overall entire battery packs 4 is increased, and thereby the cruising range can be ensured.

The support device 1 couples the battery pack 4 to the side rails 21 and supports the battery pack 4. In other words, the battery pack 4 is supported by the side rails 21 via the support device 1. The present embodiment illustrates a support apparatus formed to be symmetric (symmetric about a plane) about a vertical plane passing through the center of the vehicle width direction D2 and extending in the vehicle length direction D1.

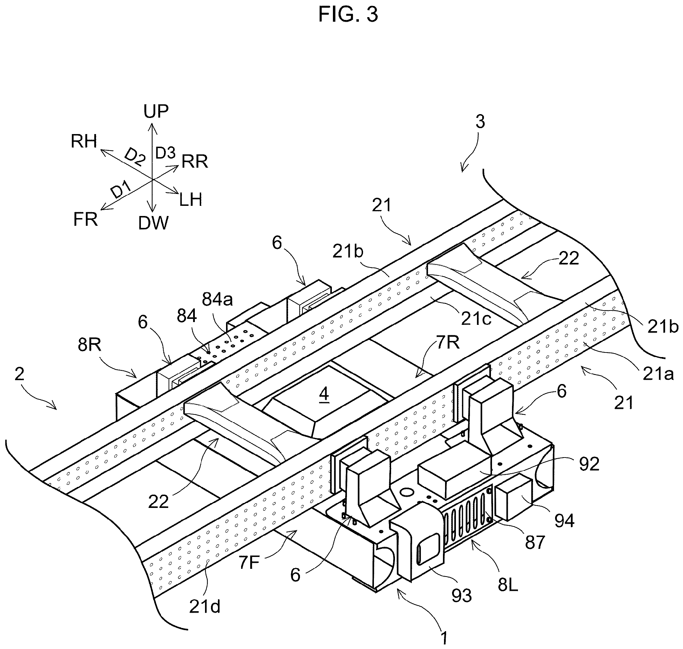

As shown in FIG. 3 side bracket 5 that accommodates the battery pack 4 and frame-side brackets (coupler bracket) 6 that couples the battery-side bracket 5 and the side rails 21 (see FIGS. 3 and 4). The battery-side bracket 5 is an outer wall body disposed on the outer circumference of the battery pack 4, and has a function of protecting the battery pack 4 from collision load. On the other hand, the frame-side brackets 6 extend outward in the vehicle width direction D2 and downward from the side rails 21, and have a function of suspending the battery pack 4 accommodated in the battery-side bracket 5 from the side rails 21.

The battery-side bracket 5 of the present embodiment has a main bracket (front bracket) 7F disposed so as to cover the front edge part of the battery pack 4, a main bracket (rear bracket) 7R disposed so as to cover the rear edge part of the battery pack 4, an end cross member (right bracket) 8R covering the right edge part 40RH of the battery pack 4, and an end cross member (left bracket) 8L covering the left edge part 40LH of the battery pack 4.

The pair of main brackets 7R, 7L have the same shapes as each other, and when they are not distinguished from each other, they are simply referred to the main bracket 7 or a bracket 7. The pair of end cross members 8R,8L have the same shapes as each other, and when they are not distinguished from each other, they are simply referred to as an end cross member 8, a side edge part bracket 8, or a bracket 8.

A pair of main brackets 7F, 7R are formed symmetrically to each other with respect to a vertical plane passing through the center of the vehicle width direction D2 and extending in the vehicle length direction D1 as a plane of symmetry. The main brackets 7F, 7R are also formed symmetrically to each other with respect to a plane.

The pair of end cross members 8r, 8L are also formed in longitudinal symmetric to each other with respect to a vertical plane passing through the center of the vehicle length direction D1 and extending in the vehicle width direction D2 as a plane of symmetry. The end cross members 8R, 8L are also formed symmetrically to each other with respect to a plane.

Each of the main brackets 7F, 7R and the end cross members 8R, 8L of the present embodiment is formed of a steel plate, and is formed into a channel-shape. The battery-side bracket 5 is arranged, with these main brackets 7F, 7R and the end cross members 8F, 8R, so as to surround the four sides of the battery pack 4.

Further, in the present embodiment, as the material of the main brackets 7F, 7R and the end cross members 8R, 8L (i.e., battery-side bracket 5), high-tensile steel is used. High tensile strength steel sheet is, for example, a steel material defined to have a tensile strength of 490 MPa or more and less than 1000 MPa, and has advantages of capability of being thinned and having corrosion resistance. By using this, the battery-side bracket 5 and ultimately the support device 1 can be lighting while increasing the withstand load strength. Incidentally, the withstand load strength required for the support device 1 is strength not damaging the case of the battery pack 4 even if the support device 1 is subjected to certain collision load when the vehicle collides a collision side collision, a front collision, or a rear collision).

However, the material of the battery-side bracket 5 is not limited to this, and other steel materials or materials except for steel materials may be used. Since further lighting can be achieved if using ultra-high tensile strength steel is defined to have a tensile strength of 1000 MPa or more as steel material having higher tensile strength, but at present, ultra-high tensile strength steel, as compared with the high-tensile strength steel, is difficult to be processed and leads to cost increase, the present embodiment uses high-tensile steel.

Note that definition of high-tensile steel and ultra-high-tensile steel may be different with manufactures, for example. Therefore, the above 490 MPa and 1000 Mpa are exemplarily described as reference values.

Each of the main brackets 7F, 7R and the end cross members 8R, 8L is channel-shaped, the main brackets 7 each have a web part (side face part) 71, an upper flange part (upper face part) 72, and a lower flange part (lower face part) 73, and the end cross members 8 each have a web part (side face part) 81, a upper flange part (upper face part) 82, and a lower flange part (lower face part) 83.

The main brackets 7F are arranged so as to cover the front edge part 40FR of the battery pack 4. That is, the main bracket 7F is arranged in such a posture that the web part 71 is disposed along the front face 43 of the battery pack 4, the upper flange part 72 is disposed along the front side portion of the upper face 45 of the battery pack 4, and the lower flange part 73 is disposed along the front side portion of the lower face 46 of the battery pack 4.

The main bracket 7R is positioned so as to cover the rear edge part 40RR of the battery pack 4. That is, the main bracket 7R is arranged in such a posture that the web part 71 is disposed along the rear face 44 of the battery pack 4, the upper flange part 72 is disposed along the rear side portion of the upper face 45 of the battery pack 4, and the lower flange part 73 is disposed along the rear side portion of the lower face 46 of the battery pack 4.

The right end-cross member 8R is arranged so as to cover the right edge part 40RH of the battery pack 4. That is, the end cross member 8R is arranged in such a posture that the web part 81 is disposed along the right side surface 41 of the battery pack 4, the upper flange part 82 is disposed along the right side portion of the upper face45 of the battery pack 4, the lower flange part 83 is disposed along the right side portion of the lower face 46 of the battery pack 4.

The left end cross member 8L is positioned so as to cover the left edge part 40LH of the battery pack 4. That is, the end cross member 8L is arranged in such a posture that the web part 81 is disposed along the left side face 42 of the battery pack 4, the upper flange part 82 is along the left side portion of the upper face 45 of battery pack 4, and the lower flange part 83 is disposed along the left side portion of the lower face 46 of the battery pack 4.

Further, under a state where the main brackets 7 are disposed in advance in the front edge part 40FR and the rear edge part 40RR of the battery pack 4, the end cross members 8 are disposed in the right edge part 40RH and the left edge part 40LH of the battery pack 4, so that the main brackets 7 and the end cross member 8 are coupled to the battery pack 4. Accordingly, the flange parts 72 and 73 of each bracket 7 are disposed on the battery pack 4 (inside the vehicle height direction D3) closer than the flange parts 82 and 83 of the end cross members 8.

With this configuration, the both ends of the flange parts 72 and 73 of each main bracket 7 overlap the both ends of the flange parts 82 and 83 of the corresponding end cross members 8. In this overlapping parts (overlapping parts) 51 (see FIG. 1), the main brackets 7 and the end cross members 8 are coupled to each other. In FIG. 1, one of the overlapping parts 51 is segmented by dot-dot-dashed line. In the present embodiment, the main brackets 7 and the end cross member brackets 8 are coupled by using fasteners such as non-illustrated bolts and multiple fastening holes 90 shown in FIG. 1. Here, three fastening holes 90 arranged in a triangular shape serve as a set, but the number of holes is not limited to this. Also, the coupling means is not limited to this, and may be coupled by using any fixing device or any bonding means (e.g., welding or gluing).

Further, the end cross member 8 is arranged such that the web part 81 is spaced apart from with respect to the side faces 41 and 42 of the battery pack 4, and consequently the deformation allowance (absorb allowance of the collision load) in the event of a collision is reserved. Although this deformation allowance is reserved according to the deformation amount to be assumed, if the deformation allowance is not required, each end cross member 8 can be arranged such that the web part 81 of end cross member 8 are in contact with the side faces 41, 42 of the battery pack 4.

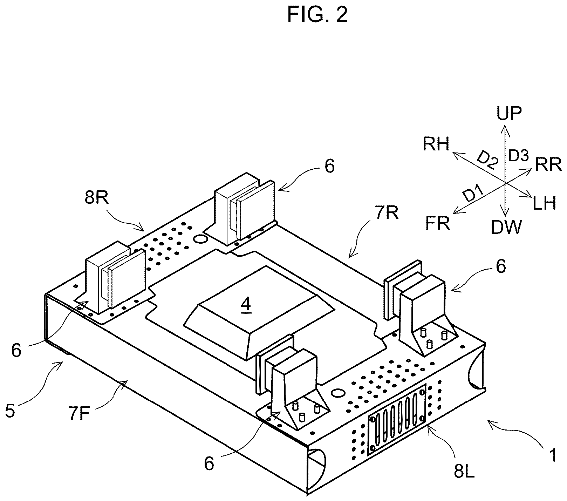

As shown in FIG. 2, the frame-side brackets 6 are fixed at the lower portions thereof to the upper portion of the overlapping part 51 in which the upper flanges 72 and 82 of the main bracket 7 and the end cross member 8 overlap and are coupled to each other. Further, each frame-side bracket 6 is, as shown in FIG. 3 fixed to the web part 21a of side rail 21. Therefore, the frame-side brackets 6 are provided two for each of the left and right of the electric track 3 (outside the vehicle width direction D2 of the respective side rails 21) (four in total). The portion where the upper flange part 72 of the main bracket 7, the upper flange part 82 of the end cross member 8, and the lower part of the frame-side bracket 6 are coupled is referred to as a coupling part 50 (see FIG. 1). Incidentally, the coupling part 50 is an contact face of the lower portion of the frame-side bracket 6 with the upper flange part 82 of the end cross member 8, is the entire lower face of the frame-side bracket 6 or the main part of the lower face of the frame-side bracket 6, and is a region located inside of the overlapping part 51. In FIG. 1, one of the coupling parts is segmented by dot-dot-dashed line.

Further, as shown in FIG. 1, the main bracket 7 and the end cross member 8 are provided with the upper flange parts 72,82 and the lower flange parts 73,83 protruding from the web parts 71,81. The upper flange parts 72, 82, which requires larger withstand load strength than the lower flange parts 73, 83, are set to have relatively large projecting amount P.

Since both ends of the main bracket 7 and the end cross member 8 having coupling parts 50 and overlapping parts 51 require relatively large withstand load strength, both ends of the upper flange part 72 and 82 are set to have larger large projecting amount P than the intermediate part.

Furthermore, lightening holes 84 are formed at the region A in the intermediate part of the upper flange part 82 of the end cross member 8, which region requires relatively small withstand load strength. In this example, the lightening holes 84 are formed by a large number of small holes 84a. The small holes 84a are formed to have the same arrangement and hole diameter as holes 21d for mounting vehicle component provided regularly arranged vertically and horizontally in web parts 21a of the side rails 21 so that various vehicle components such as on-board devices and tubes, harnesses can be mounted to the holes 84a.

Further, on the intermediate part of the web part 81 of the end cross member 8, which part requires relatively small withstand load strength, an opening 86 for operation, and lightening holes 89 are formed. A cover 87 is mounted over the opening 86. Like the holds 21for mounting vehicle components, the lightening holes 89 are formed of a large number of small holes 89a, so that vehicle components 93, 94 and the like can be attached to the lightening holes 89.

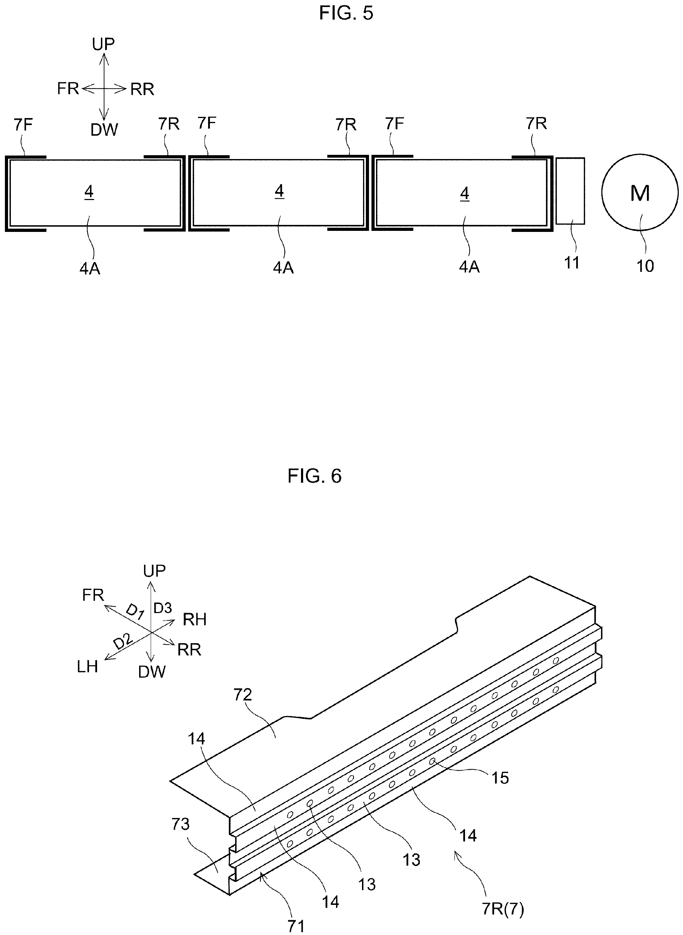

As described above, the overall capacity of the battery pack 4 can be increased by arranging the respective units of the battery pack 4 along the vehicle width direction D1, and consequently, the cruising range can be reserved. For example, FIG. 4 shows an example in which three battery packs 4 are provided side by side in the vehicle length direction D1.
In this case, as shown in FIG. 5, the main brackets 7 are disposed on the front and the rear of each battery pack 4.

When an attempt is made to efficiently mount the battery packs 4 in a limited space, the respective gaps (clearances) between the main bracket 7 and the battery housing 4A and between neighboring main brackets 7 need to be set as small as possible, and the main brackets 7 are disposed from such a viewpoint.

### [1-2. Structure of Specific Brackets]

A vehicle component, which is a component of the electric vehicle 3, is adapted to be mounted on the main brackets 7 as well as the web part 21a of the side rail 21 and the end cross members 8.

In the present embodiment, as shown in FIG. 5, a fuse box (component) 11 of an electric motor (driving motor) 10 that drives the electric vehicle 3 is attached to the main bracket 7.

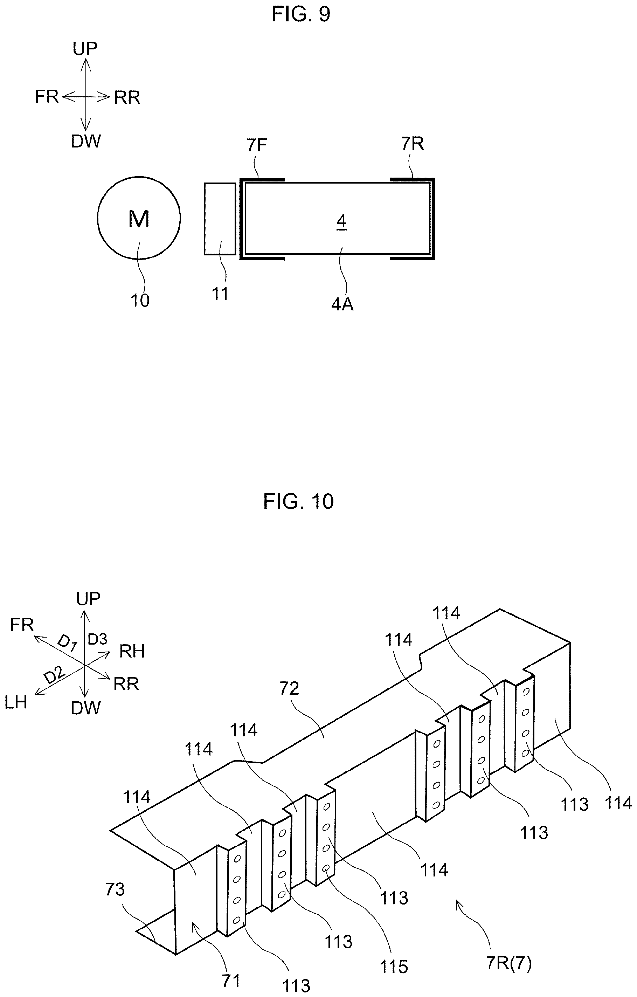

In this example, since the electric motor 10 is mounted on the rear side of the battery pack 4 (here, rear of a group of the multiple battery packs 4), the fuse box 11 is mounted on the main bracket 7 the closest to the electric motor 10, that is, the main bracket 7 mounted on the rear edge part 40RR of the rearmost battery pack 4. In contrast, as shown in FIG. 9, when the electric motor 10 is mounted on the front side of the battery pack 4, the fuse box 11 is sufficiently attached to the main bracket 7 mounted on the front edge part 40FR of the main bracket 7closest to the electric motor 10.

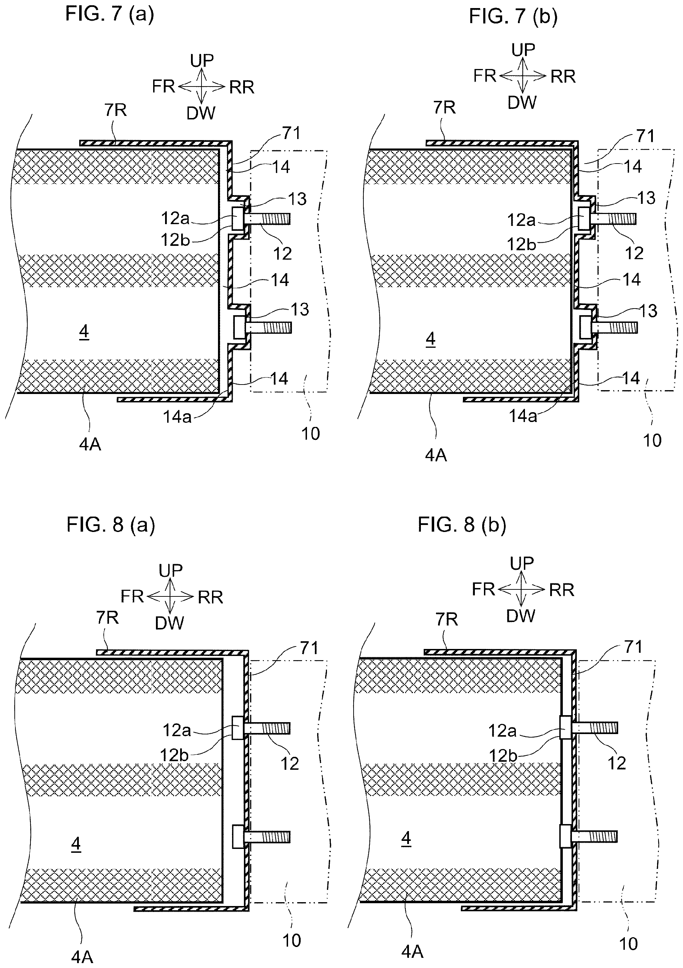

The main bracket 7, as described above, includes a web part 71, the upper flange part 72, the upper flange part 73. Since it is however difficult to secure an installation space above and under the upper flange part 72 and the lower flange part 73, the fuse box 11 is installed on the web part 71. For this installation, welding bolts 12 (see FIG. 7) serving as installing member are fixed to the web part 71.

In order to fix the welding bolts 12 to the web part 71, communicating holes are formed on the web part 71, the shafts of the welding bolts 12 are inserted into the communicating holes from the inside of the web part 71 (on the side that comes closer to the battery pack 4 when being installed), and then the heads 12a of the welding bolts 12 are welded to the web part 71.

As shown in FIG. 8(a), the web part 71 of the main bracket 7 usually has a flat plate shape, and therefore, in this case, the heads 12a of the welding bolts 12 protrude from the inner surface of the web part 71.

When the vehicle undergoes, for example, a front collision or a rear collision, the battery pack 4 and the weld bolt 12 come close relatively to each other and, as shown in FIG. 8(b), the heads 12a of the welding bolts 12 may plunge into the battery housing 4A, resulting in damages such as perforations in the battery housing 4A. Since occurrence such damage to the battery hosing 4A may be a risk, it is desirable to avoid such damage to the battery housing 4A as much as possible.

Therefore, in the main bracket 7 of the present support device 1, as shown in FIGS. 6 and 7(a), the heads 12a of the welding bolts 12 is accommodated in the depressing face parts 13 by forming depressed face parts 13 which are depressed with respect to the battery pack 4 (battery housing4A) and projecting face parts 14 which are projecting toward the battery pack 4 (the battery housing 4A) on the web part 71, forming communicating holes 15 on the projecting face parts 14, and inserting the shafts of the weld bolts 12 from the inner side of the web part 71 (the side closer to the battery pack 4).

In the present embodiment, the projecting face parts 14 and the depressed face part 13 extend linearly (along a straight line), and multiple projecting face parts 14 are provided so as to sandwich the one or more depressed face parts 13. In the present embodiment, three projecting face part 14 and two depressed face parts 13 extend horizontally in straight lines. Alternatively, as shown in FIG. 10, projecting face parts 114 and depressed face parts 113 with the communicating holes 115 may linearly extent in the vertical direction. The directions in which the projecting face parts 14, 114 and the depressed face part 13, 113 extend are not particularly limited. If the projecting face parts 14, 114 and the depressed face parts 13, 113 are linearly extended, the "linear" is not limited to a straight line.

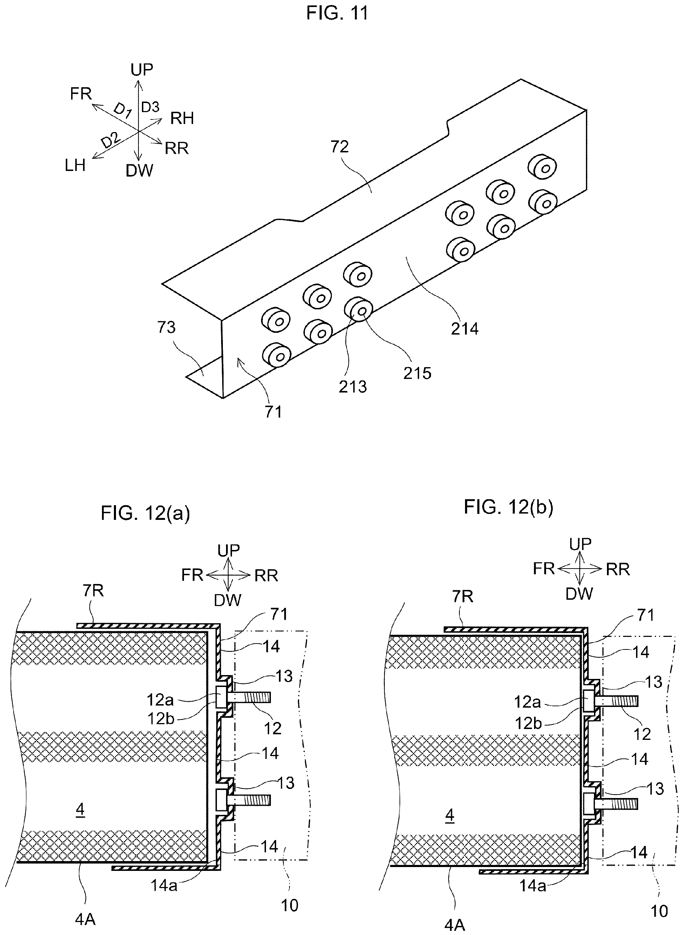

Further, as shown in FIG. 11, depressing face parts 213 having communicating holes 215 and projecting face part 214 may be formed. That is, the depressed face parts 213 are dispersed in an island-like manner on the projecting face part 214. In this case, the projecting face part 214 are preferably positioned so as to surround the circumferences of the depressed face parts 213.

In any case, the tip part 12b of the head 12a of the welding bolt 12 accommodated in the in depressed face parts 13, 113, 213 and protruding from the depressed face parts 13, 113, 213 toward the battery housing 4A are arranged at positions further to the sides of the depressed face parts 13,113, 213 than the apex faces 14a of the projecting face parts 14 or the apex faces (not illustrated) of the projecting face parts 114 , 214 from the outer face of the battery housing 4A or at positions flush with the apex faces.

Further, in any case, in the event of a collision of the vehicle 3, the apex faces of projecting face parts 14,114,214 are preferably planes parallel to the outer surface of the battery housing 4A facing these apex faces. With this configuration, if coming close to and colliding with the outer face of the battery hosing 4A, the apex faces 14, 114, 214 are brought into face-to-face contact with the battery housing 4A.

Further, when multiple projecting face parts 14, 114 are provided, it is preferable that the apex faces of the respective projecting face parts 14, 114 have the same height. In addition, from the viewpoint of distributing the load applied to the battery housing 4A when the above vehicle collision occurs, it is preferable that the apex faces of the projecting face parts 14, 114, 214 have an area as large as possible. Furthermore, from the viewpoint of avoiding the application of the concentrated load to the battery housing 4A when the above vehicle collision occurs, it is preferable that the peripheries of projecting face parts 14,114,214 (e.g., the boundary portions between depressed face parts 13,113,213) are not edged.

In the present embodiment, the battery housing 4A is formed by aluminum die casting, which is relatively light in weight, and as indicated by a shadow pattern in shown in FIG. 7, has skeleton portions having higher stiffness and strength than the remaining portions. In the present embodiment, the skeleton portions are provided horizontally along the upper part, the lower part, and the intermediate part therebetween of the battery housing 4A. The skeleton portions can be configured by providing reinforcing members or reinforcing structures for enhancing rigidity and strength.

In the present embodiment, the projecting face parts 14, 114, 214 are disposed at positions facing the skeleton portions.

In the present embodiment, the tip parts 12b of the heads 12a of the welding bolts 12 are preferably disposed at positions further to the sides of the depressed face parts 13, 113, 213 than the apex faces of the projecting face parts 14, 114, 214, but the tip parts 12b of the heads 12a of the welding bolts 12 may alternatively be disposed at the positions flush with the apex faces of the projecting face parts 14, 114, 214 with respect to the outer face of the battery housing 4A. In this alternative, the overall length of the battery housing 4A, including the fuse box 11, can be made compact.

Furthermore, in the present embodiment, the apex faces of projecting face parts 14,114,214 are disposed at positions apart from the outer face of the battery housing 4A, but may alternatively be disposed, as shown in FIG, 12(b), such that the tip parts 12b of the heads 12a of the welding bolt 12 are in contact with the outer face of the battery housing 4A from the beginning.
Also in this alternative, the overall length of the battery housing 4A, including the fuse box 11, can be made compact.

### [2. Actions and Effects]

The support device 1 for the drive battery according to the present embodiment, which is configured as described above, can obtain the following functions and effects.

(1) When the vehicle 3 collides (a front collision or a rear collision), only the apex face parts 14, 114, 214 firstly collide with the battery housing 4A as shown in FIG. 7(b), or the apex facing parts 14, 114, 214 and the tip parts 12b of the heads 12a of the welding bots 12 concurrently collide with the battery housing 4A. Consequently, it is possible to avoid local collision of the heads of the welding bolt 12 with the battery hosing 4A, so that it is possible to inhibit the housing of the battery hosing4A from being damaged. Therefore, the safety is enhanced.
(2) Since the projecting face parts 14, 114, 214 are disposed at positions facing the skeleton portions at which the battery housing 4A has high strength, the battery housing 4A is less easily damaged even if the projecting face parts 14,114,214 collide with the battery hosing 4A, so that it is possible to inhibit the battery housing 4A of the drive battery from being damaged.
(3) Since the projecting face parts 14 and the depressed face parts 13 linearly extend and multiple projecting face parts 14 are provided so as to sandwich the depressed face parts 13, it is possible to surely avoid, when the vehicle 3 collides, a local collision of the heads of the welding bolt 12 with the battery housing 4A, so that it is possible to inhibit the battery housing 4A from being damaged.
(4) By dispersing the depressed face parts 213 in an island-like manner on the projecting face part 14 and arranging the depressed face parts 213 so as to surround the circumferences of the depressed face parts 213, it is possible to surely avoid, when the vehicle 3 collides, a local collision of the heads of the welding bolt 12 with the battery housing 4A, so that it is possible to inhibit the battery housing 4A from being damaged. Be in
(5) By forming the apex faces of the projecting face parts 14,114,214 into flat faces parallel to the outer face of the battery housing 4A and arranging the projecting face parts 14, 114, 214 such that the apex faces thereof are brought into face-to-face contact with the outer face of the battery housing 4A when the projecting face parts 14, 114, 214 come close to and collide with the outer face of the battery housing 4A, it is possible to avoid the apex faces of the projecting face parts 14, 114, 214 from locally colliding with the battery housing 4A, so that it is possible to inhibit the housing of the battery hosing4A from being damaged.
(6)Since the fuse box (component) 11 of the electric motor 10 that drives the electric vehicle 3 is attached to the main bracket 7 positioned closer to the electric motor 10, it is possible to spatial-efficiently arrange the fuse box 11.

### [3. Miscellaneous]

The configuration of the above embodiment is exemplary, and can be appropriately changed and implemented without departing from the scope of the present invention.

For example, in the above embodiment, an example has been described in which the support device for a drive battery is applied to a truck, but the support device for a drive battery of the present embodiment may be applied to a vehicle except for a truck.

Further, in the above embodiment, the support device for a drive battery is coupled to the side rails 21 and is supported on the side rails 21, the support device may be supported by being coupled to the structural elements of the vehicle except for the side rails 21.

The shapes of the depressed face parts 13, 113, 213 and the projecting face parts 14, 114, 214 are not limited to those of the above embodiment, and may be set to various shapes.

Further, the above embodiment assumes the fuse box 11 as a component of the electric vehicle, but the configuration of the main bracket 7 of the present support device 1 is also applicable to the mounting of other various components.

In the above embodiment, the weld bolt 12 is exemplified as the installing member, but the installing member is not limited to this. Alternatively, a welding nut or the like may be applied to the installing member.

Further, in the above embodiment, as shown in FIG. 3, the drive battery 4 and the support device 1 of the drive battery are arranged to the outer side of the vehicle width direction D2 with respect to side rails 21, but the drive battery and the support device of the drive battery of the present embodiment may be settled between the left and right side rails 21. The size and the shape of the drive battery or its mounting on the side rails or the like can be modified according to the requirement.

### [4. Appendix]

In relation to the above embodiment, the following appendices are further disclosed.

### (Appendix 1)

A support device for a drive battery mounted on an electric vehicle, the support device includes:
a bracket that covers a front side or a rear side of the drive battery and that has a squared C-shaped cross section including a side face part having a depressed face part depressed against the drive battery and a projecting face part projecting toward the drive battery, an upper face part, and a lower face part; and
an installing member that installs a component of the electric vehicle, wherein
the installing member is attached to the depressed face part, and
a tip part of the installing member projecting from the depressed face part to the drive battery is arranged at a position departing from an outer face of a housing of the drive battery further to the depressed face part than an apex face of the projecting face part or at a position flush with the apex face.

### (Appendix 2)

The support device for a drive battery according to appendix 1, wherein
the projecting face part is arranged at a position facing a portion of the housing, the portion having high strength.

### (Appendix 3)

The support device for a drive battery according to appendix 1 or 2, wherein
the projecting face part and the depressed face part linearly extend; and
a plurality of the projecting face parts are provided so as to sandwich the depressed face part.

### (Appendix 4)

The support device for a drive battery according to appendix 1 or 2, wherein
the projecting face part extends around a circumference of the depressed face part.

### (Appendix 5)

The support device for a drive battery according to any one of appendices 1 to 4, wherein
the projecting face part is arranged such that the apex face is in contact with a face of the housing.

### (Appendix 6)

The support device for a drive battery according to any one of appendices 1 to 5, wherein
the component is a fuse box of a driving motor of the electric vehicle.

### [Reference Signs List]

- 1: support device (support device for drive battery)
- 2: ladder frame
- 3: electric truck (electric vehicle, vehicle)
- 4: battery pack for driving (drive battery, battery pack)
- 4A: battery housing
- 5: battery-side bracket
- 6: frame-side bracket (coupler bracket)
- 7F, 7: main bracket (front bracket)
- 7R, 7: main bracket (rear bracket)
- 8R, 8: end cross member (right bracket)
- 8L, 8: end cross member (left bracket)
- 10: electric motor (driving motor)
- 11: fuse box (component)
- 12: welding bot (installing member)
- 12a: head of welding bolt 12
- 12b: tip part of head 12a of welding bolt 12
- 13, 113, 213: depressed face part
- 14, 114, 214: projecting face part
- 14a: apex face of projecting face part 14
- 15, 115, 215: communicating hole
- 21: side rail
- 21a: web part of side rail 21
- 21b, 21c: flange part of side rail 21
- 21d: hole for mounting vehicle component
- 22: cross member
- 40FR: front edge part of battery pack 4
- 40RR: rear edge part of battery pack 4
- 40RH: right edge part of battery pack 4
- 40LH: left edge part of battery pack 4
- 41: right side face of battery 4
- 42: left side face of battery 4
- 43: front face of battery pack 4
- 44: rear face of battery pack 4
- 45: upper face of battery pack 4
- 46: lower face of battery pack 4
- 50: coupling part
- 51: overlapping part
- 71: web part (side face part) of main bracket 7
- 72: upper flange part (upper face part) of main bracket 7
- 73: lower flange part (lower face part) of main bracket 7
- 81: web part (side face part) of end cross member 8
- 82: upper flange part (upper face part)
- 83: lower flange part (lower face part)
- 84: lightening hole
- 84a: small hole as lightening hole 84
- 85: lightening hole
- 86: opening
- 87: cover
- 89: lightening hole
- 89a: small hole as lightening hole 89
- 90: fastening hole
- 91: communicating hole
- 92, 93, 94: vehicle component
- D1: vehicle length direction D1
- D2: vehicle width direction D2
- D3: vehicle height direction D3
- L1, L2: boundary line
- FR: front
- RR: rear
- LH: left hand
- RH: right hand
- UP: upside
- DW: downside
- P: protruding amount from web part 71, 81 of flange part 72,82,73,83

## Claims

1. A support device for a drive battery mounted on an electric vehicle, the support device comprising:
a bracket that covers a front side or a rear side of the drive battery and that has a squared C-shaped cross section comprising a side face part having a depressed face part depressed against the drive battery and a projecting face part projecting toward the drive battery, an upper face part, and a lower face part; and
an installing member that installs a component of the electric vehicle, wherein
the installing member is attached to the depressed face part, and
a tip part of the installing member projecting from the depressed face part to the drive battery is arranged at a position departing from an outer face of a housing of the drive battery further to the depressed face part than an apex face of the projecting face part or at a position flush with the apex face.

2. The support device for a drive battery according to claim 1, wherein
the projecting face part is arranged at a position facing a portion of the housing, the portion having high strength.

3. The support device for a drive battery according to claim 1, wherein
the projecting face part and the depressed face part linearly extend; and
a plurality of the projecting face parts are provided so as to sandwich the depressed face part.

4. The support device for a drive battery according to claim 1, wherein
the projecting face part extends around a circumference of the depressed face part.

5. The support device for a drive battery according to claim 1, wherein the projecting face part is arranged such that the apex face is in contact with a face of the housing.

6. The support device for a drive battery according to any one of claims 1-5, wherein
the component is a fuse box of a driving motor of the electric vehicle.
